# EUROPÄISCHE PATENTSCHRIFT

(11) **EP 3 507 958 B1**
(45) Veröffentlichungstag und Bekanntmachung des Hinweises auf die Patenterteilung: **12.08.2020**
(21) Anmeldenummer: 16769860.4
(22) Anmeldetag: 03.09.2016
(51) Int. Cl.: H04L 29/06, H04L 29/08

(54) **VERFAHREN ZUM STREAMEN UND ZUR WIEDERGABE VON ANWENDUNGEN ÜBER EIN BESTIMMTES TELEKOMMUNIKATIONSSYSTEM UND VERWENDUNG**
METHOD FOR STREAMING AND REPRODUCING APPLICATIONS VIA A PARTICULAR TELECOMMUNICATIONS SYSTEM AND USE
PROCÉDÉ DE DIFFUSION EN CONTINU ET DE REPRODUCTION D'APPLICATIONS PAR LE BIAIS D'UN SYSTÈME DE TÉLÉCOMMUNICATION DÉTERMINÉ ET UTILISATION

(43) Veröffentlichungstag der Anmeldung: 10.07.2019
(73) Patentinhaber: Gorillabox GmbH, 22765 Hamburg (DE)
(72) Erfinder: PETER, Frederik, D-66763 Dillingen (US); KHALIL, Sheikh, West London Middlesex (GB); WESTERMANN, Remco, 40489 Düsseldorf (DE)
(74) Vertreter: Beyer, Rudi
(86) Internationale Anmeldenummer: PCT/EP2016/001491
(87) Internationale Veröffentlichungsnummer: WO 2018/041324

(56) Entgegenhaltungen:
- WO-A1-2009/073830
- WO-A1-2014/186858

## Beschreibung

### Gattung

Die Erfindung betrifft ein Verfahren zum Streamen und zur Wiedergabe von Anwendungen über ein bestimmtes Telekommunikationssystem.

Des Weiteren betrifft die Erfindung die Verwendung eines derartigen Verfahrens mit einer plattformunabhängigen Streaming-Technologie, die einmal programmiert und auf beliebige Telekommunikationsendgeräte portierbar ist, bei welchem das Streamen der einzelnen Anwendungen, wie Videospiele, über ein WAN, erfolgt.

### Stand der Technik

Heutzutage haben wir den Vorteil, dass wir durch immer komplexer werdende Programme immer komplexer werdende Anforderungen meistern können. Jedoch bringt dies den Nachteil, dass die Programme immer komplexer programmiert werden und dadurch an Größe (MB) gewinnen. Dies hat Auswirkungen auf die Dauer einer lokalen Installation. Oft müssen Anwender mehrere Stunden warten, bis die Software erfolgreich installiert wurde.

Die lange Installationszeit lässt sich in drei Bereiche aufgliedern:
Download: Oft müssen sehr große Mengen an Daten geladen werden, bevor eine Installation durchgeführt werden kann. dies kann oft, abhängig von der lokalen Internetverbindung, von wenigen Minuten bis mehreren Stunden dauern. Oftmals kann der Prozess übersprungen werden, indem man das Programm auf einem physikalischen Datenträger erwirbt. Dies ist jedoch mit einigen Nachteilen behaftet, gerade im Online-Geschäft. Fort wird oft auf die digitale Auslieferung der Software mittels Download zurückgegriffen.
Installation: Nachdem ein Programm lokal zur Verfügung steht, muss es entsprechend installiert werden, um einen lauffähigen Zustand zu erreichen. Dieser Prozess kann je nach Programm unterschiedlich lang dauern und kann nicht übersprungen werden.
Updating: Nach der Installation wird die Software auf einen aktuellen stand gebracht. Grund dafür können zum Beispiel Neuerungen an der Software sein, die nach zur Verfügungstellung der initialen Anwendung, veröffentlicht werden.
   Alle diese Schritte in ihrer Gesamtheit führen zu langen Wartezeiten, bis eine Anwendung lauffähig ist. Für jede dieser einzelnen drei Bereiche gibt es Technologien und Erfindungen, um Zeit zu sparen. Jedoch gibt es keine Möglichkeit, Anwendungen noch vor Download/Installation/Updating lokal abzuspielen.

Außerdem ist es heutzutage immer wichtiger, Anwendungen nativ zu entwickeln. Native Entwicklungen sind jedoch immer individuell an eine bestimmte Plattform angepasst. Problematisch ist es jedoch, dass immer neuere und modernere Plattformen auf den Markt kommen und Nutzer nicht nur eine Plattform, sondern viele verschiedene Plattformen nutzen.

Ein weiteres Problem ist die dahinter liegende Hardware. Spezifische Anwendungen liegen auch spezifischer Hardware zugrunde. Diese Hardware hat bestimmte Anforderungen an die Anwendung zu erfüllen, zum Beispiel Grafik-Last, Prozessor-Kapazität, Speicher, Energieverbrauch. Umgekehrt kann aber auch eine Anwendung mehr Rechenleistung oder Grafikleistung beanspruchen, als die Hardware der Plattform zur Verfügung stellen kann. Dies kann speziell bei grafikintensiven Anwendungen - zum Beispiel Spiele - dazu führen, dass Anwender diese nicht nutzen können, da das System inkompatibel ist. Grundsätzlich gibt es drei verschiedene Ansätze, Anwendungen auf eine plattformfremde Umgebung zu übertragen.

Zunächst gibt es die sogenannte native Entwicklung (Portierung). Die Anwendung wird unter Gesichtspunkten der fremden Plattform neu entwickelt. Dies ist von allen drei Methoden der komplexeste und zeitintensivste Weg, jedoch bietet dieser die Möglichkeit, alle Funktionalitäten der neuen Plattform zu nutzen. Ein Problem dieser Methode ist jedoch, dass die Anwendung den Rahmenbedingungen der Plattform unterliegt. So können zum Beispiel Spiele mit hohen Grafikanforderungen nicht auf eine mobile Plattform portiert werden. Auch stellen unterschiedliche Hardware-Voraussetzungen innerhalb der fremden Plattform ein Problem dar, da zum Beispiel nicht jeder Anwender dasselbe Mobilfunkgerät hat.

Ergänzend dazu existiert bereits Software, die es dem Entwickler ermöglichen soll, eine native Entwicklung leichter zu gestalten. Eine Portierung findet unter Verwendung bestimmter Software dahingehend statt, dass Teile der existierenden Software ersetzt werden, um so eine Kompatibilität zu dem Fremdsystem zu erreichen. Dieser Schritt ist nicht immer möglich, da einige Plattformen sich zu sehr architektonisch voneinander unterscheiden. Auch fehlt in solchen Fällen meistens der Support des Betreibers der Plattform, aus diesem Grund wird meistens auf die native Entwicklung zurückgegriffen.

Web-Apps sind Anwendungen, welche für Webbrowser basiert entwickelt werden und dadurch auf fast allen Plattformen zu nutzen sind. Hierzu wird auch oft ein WCM-System (Webcontent Management) genutzt. Jedoch sind diese Anwendungen nur über einen entsprechenden Browser zu erreichen, den die Plattform zur Verfügung stellen muss. Nachteilig bei dieser Methode ist, dass nicht alle Anwendungen mit dieser Methode portiert werden können. Es muss ein Browser genutzt werden, der eine native Darstellung der Anwendung nicht immer gewährleistet.

Streaming: Dies bedeutet, dass die Anwendung auf einem Server läuft und auf der Fremdplattform mithilfe eines Clients nur abgespielt wird. Diese Technologie ist aktuell jedoch beschränkt auf bestimmte Anwendungen, die nicht zeitkritisch sind (Stichwort hier ist "Latenz").

Durch die WO 2012/037170 A1 ist es bekannt, parallel zum Stream den Application Code auf den Client zu übertragen, um, sobald die Applikation auf dem Client lauffähig ist, den Stream beenden zu können, so dass die Applikation direkt auf dem Client läuft, um so Streaming-Ressourcen einsparen zu können. Dies kann für zum Beispiel Konsolen interessant sein, ist aber bei hardwarespezifischen Voraussetzungen (Limitierungen) nicht möglich.

In WO 2009/073830 wird ein System beschrieben, das auf Basis einer "Subscription Fee" dem User Zugriff auf einen Service bietet. In diesem Fall wird dem Kunden ein bestimmter Streaming-Server für den gebuchten Zeitraum zugewiesen. Unser System weist dem User jedoch einen optimalen Streaming-Server zu, ohne dass eine "Subscription Fee" benötigt wird.

Ergänzend dazu verwendet die WO 2010/141522 A1 einen Game Server, über den teilweise die Streaming-Kommunikation zwischen Client und Streaming Server stattfindet. Des Weiteren werden die Funktionalitäten der Interactive Layer über die Video Source abgebildet, die bei dieser Entwicklung über einen separaten Server abgehandelt wird, um auch Dritten Zugriff auf zum Beispiel Werbeflächen zu geben.

Aus Anonymous: "Cloud gaming - Wikipedia, the free encyclopedia", 24. Juni 2015 (2015-06-24), XP055268633, gefunden im Internet: URL:https://en.wikipedia.org/w/index.php?title=Cloud gaming&oldid=668477716 [gefunden am 2016-04-26] Abschnitt "Types", 2. Absatz; Seite 1, ist es bekannt, einen Teil der Serverleistung, und zwar zumindest fünf Prozent der Rechnerleistung und des Zentralservers auf das Endgerät übertragen werden muss. Das bedingt eine entsprechend große Rechnerleistung des Endgerätes. Dieses wird deshalb entsprechend teuer ausfallen. Der Urheber oder Partner, der das Spiel zur Verfügung stellt, muss hierfür einen Code zur Verfügung stellen, das dem Endgerät erlaubt, genau diese Rechnerleistung von fünf Prozent oder mehr zu selektieren. Dies bedingt zumindest auf der Seite des Programmierers einen entsprechend großen Programmieraufwand. Auch ist die Sicherheit des Systems zu bemängeln, da nicht nur der entsprechende Server, sondern auch die Endgeräte mit einem relativ hohen Sicherheitsstandard ausgeführt werden müssen.

Aus der WO 2009/073830 A1 ist es bekannt, die Rechnerleistung auf mindestens einen Zentralrechner zu legen und mindestens ein Endgerät zur Verfügung zu stellen. Hier werden Maßnahmen getroffen, um die Latenz zu beeinflussen. Darunter wird die Laufdauer eines Signals (Zeitspanne) verstanden. Zur Verbesserung der Qualität dient aber nicht nur die Latenz, sondern auch die Hops, die Bandbreite und die IDS. Diese Druckschrift beschreibt außerdem ein sogenanntes Subscription-System. Hier bezahlt der Kunde etwas im Voraus. Es ist auch mindestens ein separater Server vorgesehen, der zum Beispiel Werbung einspielen kann.

Aus der WO 2010/141522 A1 ist zu entnehmen, dass Game-Server und Video-Server nicht vereinheitlich sind. Es sind demnach mindestens zwei Server erforderlich, die die Rechnerleistung bereitstellen müssen. Es wird dabei immer nur auf plattformähnlichen Geräten kommuniziert, zum Beispiel von PC zu PC oder von Konsole zu Konsole oder von Mobilfunkgerät zu Mobilfunkgerät. In der Druckschrift wird auch angedeutet, dass die Qualitätseinstellung immer wieder erfolgen muss, ohne nähere Angaben hierüber zu machen.

Der US 2015/018094 A1 und der WO 2014/186858 A1 müssen jeweils mindestens zwei Server zur Verfügung gestellt werden, die mit dem betreffenden Endgerät kommunizieren. Es ist somit möglich, dass zu einem gewissen Zeitpunkt die Übertragung von Datenpaketen gleichzeitig von den beiden Servern zu ein und demselben Endgerät erfolgt. Hierdurch kann es zu Fehlern in der Datenübertragung kommen.

### Aufgabe

Der Erfindung liegt die Aufgabe zugrunde, ein Verfahren zum Streamen und zur Wiedergabe von Anwendungen (APPs) zu schaffen, bei dem Wartezeiten beim Downloaden, Installieren und Updaten von Softwareprogrammen minimiert werden sollen.

Des Weiteren liegt der Erfindung die Aufgabe zugrunde, eine für die Anwendung des Verfahrens geeignete Verwendung bereitzustellen.

### Lösung der Aufgabe betreffend das Verfahren

Diese Aufgabe wird ein Verfahren zum Streamen und zur Wiedergabe von Anwendungen über ein bestimmtes Telekommunikationssystem gelöst, bei welchem ein oder mehrere Streaming-Server, die durch Telekommunikation miteinander in Verbindung treten können, die betreffende Anwendung ausführen und die mit dem jeweiligen Telekommunikationsendgerät, unter Berücksichtigung von Anzahl der Hops, Latenz, Bandbreite und ISP, in Verbindung treten, wobei das betreffende Telekommunikationsendgerät die verlangte Anwendung von einem Streaming-Server abruft, der die Rechnerleistung für das Aufbauen des Video-Streams und die Kodierung der betreffenden Anwendung zur Verfügung stellt, zur Wiedergabe von Anwendungen auf anwendungsfremden System-Umgebungen, die sich entweder durch unterschiedliche Hardware- oder Software-Komponenten unterscheiden, wobei der Streaming-Server das Handling der unterschiedlichen Anwendungen sowie das Rendering/Kodierung der Applikation und dessen Audio- und Videosignale übernimmt, wobei die Daten an das jeweilige Telekommunikationsendgerät - Mobilfunkgerät, Tablet, Laptop, PC, TV - übertragen werden und die Übertragung mittels modifiziertem h.264-Protokoll durchgeführt wird und das WAN als Übertragungsmittel für Audio-/Video-Pakete per UDP/TCP verwendet wird und die komplette Rechnerleistung von dem betreffenden Streaming-Server übernommen wird, wobei die paketierten Daten nur bei dem Telekommunikationsendgerät dekodiert werden, wobei zum Bereitstellen einer plattformunabhängigen Streaming-Technologie, die einmal programmiert und auf beliebige Telekommunikationsendgeräte portierbar ist, bei welchem das Streamen der einzelnen Anwendungen, wie Videospiele, über ein WAN erfolgt, derart, dass
a) eine Kommunikation zum Session-Server mittels des Telekommunikationsendgerätes durchgeführt wird;
b) eine bestimmte Session für einen bestimmten Endabnehmer für das zum Telekommunikationsendgerät nächstliegenden Streaming-Server der betreffenden Applikation durchgeführt wird;
c) Session-Informationen durch den betreffenden Session-Server dem Telekommunikationsendgerät und dem Streaming-Server mitgeteilt werden;
d) eine direkte Verbindung zwischen dem Telekommunikationsendgerät und dem Streaming-Server der betreffenden Applikation, wie eines Videospiels, durchgeführt wird;
e) bei der Herstellung einer unmittelbaren Verbindung zwischen dem Telekommunikationsendgerät und dem betreffenden Streaming-Server folgende Schritte eingeleitet werden:
   i. Aufzeichnung der Audio-/Video-Daten der laufenden Applikation über den betreffenden Streaming-Server auf dem das Spiel läuft;
   ii. Komprimierung der Audio-/Video-Daten durch Hardware-Kodierer;
   iii. Übertragung der komprimierten Audio-/Video-Daten über WAN;
   iv. Empfang der Audio-/Video-Daten auf Seiten des Telekommunikationsendgerätes;
   v. Dekomprimierung der Audio-/Video-Daten mittels Dekodierer;
   vi. Visualisierung der Audio-/Video-Daten auf dem Telekommunikationsendgerät;
   vii. Aufzeichnung der Eingaben des Benutzers des Telekommunikationsendgerätes, wie eines Spielers, auf dem Telekommunikationsendgerät durch einen Thin-Layer, der sich dynamisch über das Anzeigefeld legt;
   viii. Übertragung der Eingaben zurück zu dem betreffenden Streaming-Server des Spiels und
   ix. Wiedergabe der übertragenen Eingaben auf Streaming Server,
wobei bei Paketverlust während der Übertragung von Dateien auf das Telekommunikationsendgerät, von einem Streaming-Server zum Telekommunikationsendgerät, mit Hilfe von mehreren Fehlerkorrekturverfahren, folgende Schritte durchgeführt werden:
a) Wiederherstellungsstrategie wird auf Telekommunikationsendgerät aufgerufen, um eine Spieleerfahrung aufrechtzuerhalten;
b) die geeignete Wiederherstellungsstrategie wird ausgewählt und
c) die Wiederherstellungsanfrage wird zu dem betreffenden Streaming-Server der Applikation wie eines Spiels zurückgesendet,
dieser Prozess kann auch vom Streaming-Server initialisiert werden, wobei das Abspielen von Anwendungen auf einem oder auf mehreren lokalen Endgeräten unabhängig von dem Downloaden auf dem lokalen Endgerät gestreamt wird, wobei ein zusätzliches Telekommunikationselement vorgesehen ist, das den Streaming-Prozess mit einer Verbindungstestvorrichtung und den betreffenden Streaming-Client überwacht und für den Installierungsprozess eine Downloadvorrichtung, eine Installationsvorrichtung und eine Updatevorrichtung vorgesehen sind, wobei die Verbindungstestvorrichtung wie folgt arbeitet:
die Verbindungstestvorrichtung ist verantwortlich für das Evaluieren der Verbindung zwischen lokalem Client und Streaming-Server, wobei die Evaluation auf der Basis von vier Kriterien durchgeführt wird: Bandbreite, Latenz, Hops, Anbindung, worin bedeuten:
Bandbreite: Dabei wird eine Datei von dem Streaming-Server heruntergeladen, wobei beim Laden der Dateien die Bandbreite gemessen wird;
Latenz: Dabei wird die Dauer gemessen, die ein Signal benötigt, um vom Streaming-Server zum Client zu gelangen;
Hops: Dabei werden der oder die Verbindungsknoten gemessen, durch die ein Signal bewegt werden muss, bevor es zum Client gelangt;
Anbindung: Dabei ist Anbindung bezogen auf den Paketverlust relevant, wobei der Paketverlust bei optischen Transportationsmedien geringer ist als Kupferkabeln;
wobei die Schwellenwerte individuell konfiguriert werden und an die Ansprüche der Anwendung angepasst werden, wobei im Falle, dass die Verbindung nicht ausreichen ist, der Streaming-Client nicht gestartet und das Spiel oder dergleichen nur geladen/installiert/upgedated wird;
und dass der Streaming-Client gestartet und die Verbindung zum Streaming-Server aufgebaut wird und dieser die anderen direkt auf den lokalen Client streamt, wobei der Streaming-Client so lange aktiv ist, so lange die Anwendung nicht lauffähig auf dem Endgerät installiert ist, wobei der Ablauf zwischen dem Streaming-Server und dem Client wie folgt erfolgt: Bei der Herstellung einer unmittelbaren Verbindung werden zwischen dem Client und dem entsprechenden Streaming-Server folgende Schritte eingeleitet:
   i. Aufzeichnung der Audio-/Video-Daten der laufenden Applikation, wie eines Spiels, über den betreffenden Streaming-Server auf dem das Spiel läuft.
   ii. Komprimierung der Audio-/Video-Daten durch Hardware-Kodierer;
   iii. Übertragung der komprimierten Audio-/Video-Daten über WAN;
   iv. Empfang der Audio-/Video-Daten auf Seiten des Telekommunikationsendgerätes;
   v. Dekomprimierung der Audio-/Video-Daten
   vi. Visualisierung der Audio-/Video-Daten auf dem Telekommunikationsendgerät;
   vii. Aufzeichnung der Eingaben des Benutzers des Telekommunikationsendgerätes, wie eines Spielers, auf dem Telekommunikationsendgerät;
   viii. Übertragung der Eingaben zurück zu dem betreffenden Streaming-Server des Spiels und
   ix. Wiedergabe der übertragenen Eingaben auf Streaming Server.

Durch die individuelle Selektierung eines ortsnahen Streaming-Servers wird die Latenz zwischen Streaming-Server und Client auf ein Minimum reduziert, so dass eine größtmögliche Reichweite mit einer größtmöglichen Abdeckung erreicht wird, während das Verfahren ressourcenschonend arbeitet und den Streaming-Server erst dann zur Verfügung stellt, wenn dieser benötigt wird.

Außerdem kann durch die Standardisierung der Kommunikation unabhängig von der Anwendung zu jedem beliebigen Zeitpunkt eine ideale Route zwecks Kommunikation zwischen Client und Streaming-Server gewählt werden.

Das erfindungsgemäße Verfahren ermöglicht es gemäß der Aufgabenstellung, nicht nativ programmierte Anwendungen auf softwarefremden Umgebungen abzuspielen, und zwar ohne die hardwarespezifischen Voraussetzungen der fremden Plattformen zu erfüllen, zum Beispiel hinsichtlich Rechnerleistung und Grafikleistung, und ohne die softwarespezifischen Voraussetzungen der fremden Plattformen zu erfüllen, zum Beispiel Anwendungen, die nur über ein bestimmtes Betriebssystem laufen. Im Vergleich zu zum Beispiel US 2014/0073428 A1 verwendet die Erfindung einen eigens für diese Anwendung erstellten Client. Dieser Client kann auf jeder beliebigen Plattform genutzt werden, um eine nahezu latenzfreie Wiedergabe eines h.264 komprimierten Streams zu gewährleisten. Für das Transferieren der Frames wird der h.264 Code verwendet. H.264/MPEG-4 AVC ist ein H.-Standard zur hocheffizienten Videokompression. Im Jahr 2003 wurde der Standard verabschiedet. Die ITU-Bezeichnung lautet dabei H.264. Bei ISO/IEC MPEG läuft der Standard unter der Bezeichnung MPEG-4/AVC (Advanced Video Coding) und ist der zehnte Teil des MPEG-4-Standards (MPEG-4/Part 10, ISO/IEC 14496-10). Bei dem erfindungsgemäßen Verfahren wird des Weiteren ein Ressourcen-Handling eingesetzt, das die Last auf einzelne Streaming Server verteilt, um zum einen Ressourcen, zum anderen aber auch Kapazitäten/Investitionen einzusparen. Dies ermöglicht es dem System, kostensparender zu arbeiten als vergleichbare Systeme wie zum Beispiel bei WO 2012/37170 A1. Auch bietet dies die Möglichkeit, im laufenden Betrieb Streaming Server abzuschalten, um zum Beispiel Wartungsarbeiten durchzuführen. Allgemein ist bekannt, dass in fast allen Fällen, wie zum Beispiel in der WO 2010/141522 A1, immer ein sogenannter Hook in den Code der Applikation initiiert werden muss, um dem Streaming Server zu ermöglichen, die Applikation zu streamen. Dies hat zur Folge, dass der Application-Code verändert werden muss, was zum einen zu Mehraufwand, zum anderen jedoch zu erheblichen Problemen mit dem ursprünglichen Entwickler der Applikation führen kann. Das erfindungsgemäße Verfahren macht einen Hook überflüssig und ermöglicht es, das Verfahren zu automatisieren.

Die Client-Application besteht grundsätzlich aus drei Teilen (decode thread, render thread und der interactive layer) und wird in der clientnetwork.so (shared library) festgehalten. Diese Teile gliedern sich in einzelne Module.

Das Client-Session Manager Module ist für die Verwaltung (starten/beenden) der Session verantwortlich und dient der Administrierung der vom User gestarteten Session. Über dieses Modul können auch Einstellungen bezüglich der Latenz-Optimierung vorgenommen werden.

Das Network Module übernimmt die Netzwerk Kommunikation und verwaltet die Kommunikation mit dem Streaming Server.

Das Controller Module fängt den User-Input der Anwendung ab und übermittelt diese dem Game Streaming Server.

Das Decoder-Render Audio Module besteht aus zwei Teilen: Das Decoder Modul übernimmt die Dekodierung des h.264 Streams. Der Audio-Player spielt den Sound aus.

Das Evaluator Modul übermittelt an den Streaming Server ein Reporting.

Das Recovery Module übernimmt das Handeln der Strategien für korrupte Frames.

Das Client Ul Module ist in den interactive layer eingebunden und ist für die UI der Applikation verantwortlich
Der interactive layer ermöglicht es eine zusätzliche visuelle Darstellung von Informationen auf dem darunterliegenden render thread zu visualisieren, um zum Beispiel Community Feature/Hilfestellungen oder Werbung anzuzeigen. Sie liegt über dem render thread und kann von dem Anwender individuell angepasst werden.

Für den interactive layer wird für jede Plattform eine vordefinierte Benutzeroberfläche zur Verfügung gestellt. Der User kann jedoch über ein sogenanntes layer scripting sich die entsprechende Benutzeroberfläche, unter bestimmten Rahmenbedingungen, selbst erstellen. Layer scripting stellt dem Anwender eine eigens entwickelte Scripting Umgebung zur Verfügung, die es ermöglicht bestimmte Funktionalitäten an vordefinierte Buttons zu binden. So kann der Anwender seine UI individuell an deren Bedürfnisse anpassen.

Der Streaming Server besteht aus grundsätzlich drei Modulen (network thread, GPU thread und session handler) und wird in der servernetwork.dll (shared library) festgehalten. Jeder laufenden Applikation auf dem Streaming Server wird jeweils ein GPU und ein network thread zugewiesen. Verwaltet wird dieser automatische Prozess von dem Session handler.

Der network thread ist für die Auslieferung der codierten Audio und Video Datei verantwortlich.

Der GPU thread ist für das Hardware encoding der Audio und Video frames der Anwendung verantwortlich, übernimmt das packet Buffering via UDP/TCP und übernimmt das timestamping und die Komprimierung.

Der Session handler ist verantwortlich für das Starten/Stoppen und Verwalten der GPU & Network threads. Er koordiniert verfügbare Ressourcen auf dem Game Streaming Server und kommuniziert mit dem Session Management Server. Die Idee hinter dem Session handler ist eine automatische Verwaltung der Ressourcen, um Kosten sparen zu können.

Der Session Management Server besteht aus vier Modulen: Authentication Module; Network Module; Session Manager Module; Evaluator Module.

Die Authentifizierung des Clients übernimmt der Access-Server, um zum einen die Clientspezifikationen für den Streaming Server zu hinterlegen, um zu überprüfen, ob der Client dazu berechtigt ist, die angeforderte Anwendung abzurufen. Die Authentifizierung kann auch mit einem Drittsystem gegenüber funktionieren, so dass auch Fremdsysteme angekoppelt werden können.

Das Network Module ist für das Loadbalancing, Qualitätssicherung und Administration verantwortlich. Unter Loadbalancing wird die gleichmäßige Verteilung der Last innerhalb des Netzwerkes verstanden. Im Bereich Qualitätssicherung wird jeder einzelne Stream überwacht und performanceabhängig optimiert (zum Beispiel durch ein bestimmtes Routing) Die Administration soll es dem Administrator ermöglichen Einsicht ihn die aktuelle Last und in das Routing zu nehmen, um bestimmte Konfigurationen vorzunehmen.

Das Session Manager Module ist für die Lastoptimierung und Kontrolle der Game Streaming Server verantwortlich. Diese Einheit verknüpft eingehende Client Anfragen mit einem freien Platz auf einem Game Streaming Server und stellt danach eine direkte Verbindung zwischen Client und Streaming Server her. Entscheidende Kriterien für eine Verknüpfung sind: Latenz zwischen Streaming Server und Applikation Client und verfügbaren Ressourcen. Ziel ist es mit dieser Einheit ein ressourcenschonendes Verfahren zu etablieren, um nicht genutzte Leistung abschalten zu können.

Evaluator Module. Dieser übernimmt das Generieren der Statistiken und Administration.

Der Content Server übernimmt das Ausspielen von Werbung auf der interactive Layer des entsprechenden Clients zu dem passenden Spiel. Werbung kann in mehreren Formen angezeigt werden. Entweder findet eine permanente Platzierung innerhalb der Applikation statt oder es werden bestimmte Zeitpunkte vordefiniert, die sobald diese ausgelöst werden, einen entsprechenden Trigger setzen um Werbung auszuspielen.

UDP (User Datagram Protocol, dt. Nutzer Datenpakete Protokoll) ist einfach, weniger aufwändig und effizienter für Echtzeit-Datenübertragungen. Das Problem mit UDP liegt allerdings darin, dass es keinen Mechanismus für den Umgang mit Datenpaketen gibt, die im Netzwerk verloren gegangen sind. Daher treten Bildschirmfehler, Ruckler und Flimmern auf, während das Spiel in der Cloud gespielt wird.

Intelligent wird eine Paketverlust-Situation korrigiert.

Blockieren: Strategie auf der Nutzerseite bei der ein Standbild gezeigt wird während die Fehlerbehebung stattfindet. Dies wird dem Nutzer eine bessere Nutzererfahrung im Vergleich zu Bildschirmfehlern, Ruckler und Flimmern ermöglichen. Daher wird diese Methode sicherstellen, dass das Bild im Falle von Paketverlust nicht fehlerhaft ist.

Nicht-Blockieren: Strategie auf der Nutzerseite bei der kein Standbild erzeugt wird während eine Übertragung der verlorenen Pakete beim Server angefragt wird. Diese erneute Übertragung ist nicht mit der TCP Übertragung vergleichbar, da sie in unserer eigenen Kontrolle liegt und wir sie effizient nur anfragen, wenn sie benötigt wird.

Innere Aktualisierung: Diese Strategie ist auf der Nutzerseite implementiert, sie spricht mit dem Videokodierer (auf Serverseite) in Laufzeit. Im Falle des Verlusts eines Pakets fordert sie den Kodierer auf, eine Bildaktualisierung vorzunehmen. Daher wird auf das Bild, sobald es aufgrund eines Verlusts von Bild-Paketen unterbrochen ist, in Millisekunden eine Bildaktualisierung angewandt, die das bloße Auge nicht einmal bemerkt.

Bild Überprüfung: Diese Strategie behält ein Auge auf die Bildrate bei der Bilder von der Serverseite gesendet werden. Im Falle einer schwankenden Bildrate stellt sie sicher, dass die Bildpakete mit einer konstanten Bildrate gesendet werden. Dies hilft dabei eine gleichmäßige Bilderfahrung zu gewährleisten.

Durch das Automatisieren des Wiederherstellungsprozesses reduziert sich die Dauer von eintretenden Fehlern um ein Vielfaches und ermöglicht so eine nahezu fehlerfreie sich selbst kontinuierlich kalibrierende Übertragung zwischen Streaming-Server und Client.

Ein besonderer Vorteil ist darin zu sehen, dass der Benutzer/Client nicht erst anzuwarten braucht, bis die Datei auf seinem Endgerät heruntergeladen ist. Vielmehr kann er sofort, zum Beispiel mit dem Spielen, beginnen, während parallel dazu das Downloaden auf seinem Endgerät erfolgt.

### Weitere erfinderische Ausgestaltungen

**Patentanspruch 2** beschreibt ein Verfahren, bei welchem die Anwendung auf dem lokalen Endgerät in vollem Umfange ohne Zeitverlust parallel und zeitgleich gestreamt wird, während die gestreamte Anwendung betreffenden lokal auf dem lokalen Endgerät heruntergeladen, installiert, kontinuierlich upgedated und gestartet wird und der Stream geschlossen wird, sobald die Dateien für die Anwendung auf dem lokalen Endgerät in vollem Umfange zur Verfügung gestellt worden sind, auf dem die Anwendungsdateien fortlaufend upgedated werden.

### Lösung der Aufgabe betreffend die Verwendung

**Patentanspruch 3** betrifft die Verwendung eines Verfahrens mit einer plattformunabhängigen Streaming-Technologie, die einmal programmiert und auf beliebige Telekommunikationsendgeräte portierbar ist, bei welchem das Streamen der einzelnen Anwendungen, wie Videospiele, über ein WAN erfolgt, wobei
a) eine Kommunikation zum Session-Server mittels des Telekommunikationsendgerätes durchgeführt wird;
b) eine bestimmte Session für einen bestimmten Endabnehmer für das zum Telekommunikationsendgerät nächstliegenden Streaming-Server der betreffenden Applikation, wie eines Spiels, durchgeführt wird;
c) Session-Informationen durch den betreffenden Session-Server dem Telekommunikationsendgerät und dem Streaming-Server mitgeteilt werden;
d) eine direkte Verbindung zwischen dem Telekommunikationsendgerät und dem Streaming-Server der betreffenden Applikation, wie eines Videospiels, durchgeführt wird;
e) bei der Herstellung einer unmittelbaren Verbindung zwischen dem Telekommunikationsendgerät und dem betreffenden Streaming-Server folgende Schritte eingeleitet werden:
   i. Aufzeichnung der Audio-/Video-Daten der laufenden Applikation, wie eines Spiels, über den betreffenden Streaming-Server auf dem das Spiel läuft;
   ii. Komprimierung der Audio-/Video-Daten durch Hardware-Kodierer;
   iii. Übertragung der komprimierten Audio-/Video-Daten über WAN;
   iv. Empfang der Audio-/Video-Daten auf Seiten des Telekommunikationsendgerätes;
   v. Dekomprimierung der Audio-/Video-Daten mittels Dekodierer;
   vi. Visualisierung der Audio-/Video-Daten auf dem Telekommunikationsendgerät;
   vii. Aufzeichnung der Eingaben des Benutzers des Telekommunikationsendgerätes, wie eines Spielers, auf dem Telekommunikationsendgerät durch einen Thin-Layer, der sich dynamisch über das Anzeigefeld legt;
   viii. Übertragung der Eingaben zurück zu dem betreffenden Streaming-Server des Spiels und
   ix. Wiedergabe der übertragenen Eingaben auf Streaming Server,
wobei bei Paketverlust während der Übertragung von Daten auf das Telekommunikationsendgerät von einem Streaming-Server zum Telekommunikationsendgerät mit Hilfe von mehreren Fehlerkorrekturverfahren, folgende Schritte durchgeführt werden:
a) Wiederherstellungsstrategien werden aufgerufen, um eine reibungslose Spieleerfahrung aufrechtzuerhalten;
b) die Wiederherstellungsstrategie wird ausgewählt und
c) die Wiederherstellungsanfrage wird zu dem betreffenden Streaming-Server der Applikation, wie des Spiels, zurückgesendet,
dieser Prozess kann auch vom Streaming-Server initialisiert werden, wobei dem Telekommunikationsnetz mindestens ein zusätzliches Telekommunikationsglied, für jeden Client, zugeordnet ist, das ein Streaming-Prozess mit einem Verbindungstester und wenigstens einem Streaming-Client umfasst für die Installation der Dateien und für die Anwendung ein Element zum Downloaden, Installieren und Updaten vorgesehen ist.

In der Zeichnung ist die Erfindung - teils schematisch - beispielsweise veranschaulicht. Es zeigen:
- Fig. 1: ein Blockdiagramm mit schematischer Darstellung der Beziehungen zwischen den einzelnen Bereichen und des Streaming Servers;
- Fig. 2: ein Blockdiagramm des Game Package Module;
- Fig. 3: ein Blockdiagramm des Session Management Server;
- Fig. 4: ein Blockdiagramm der Mobile - Interactive Layer für den Client;
- Fig. 5: ein Blockdiagramm mit einem Ablaufdiagramm des Recovery Moduls des Clients;
- Fig. 6: Mobile-Interactive-Layer - Exemplarische Visualisierung der Oberfläche eines Mobilen-Endgerätes;
- Fig. 7: Recovery Strategy Process bei Verlust eines Datenpaketes und
- Fig. 8: eine Übersicht über das Telekommunikationselement.

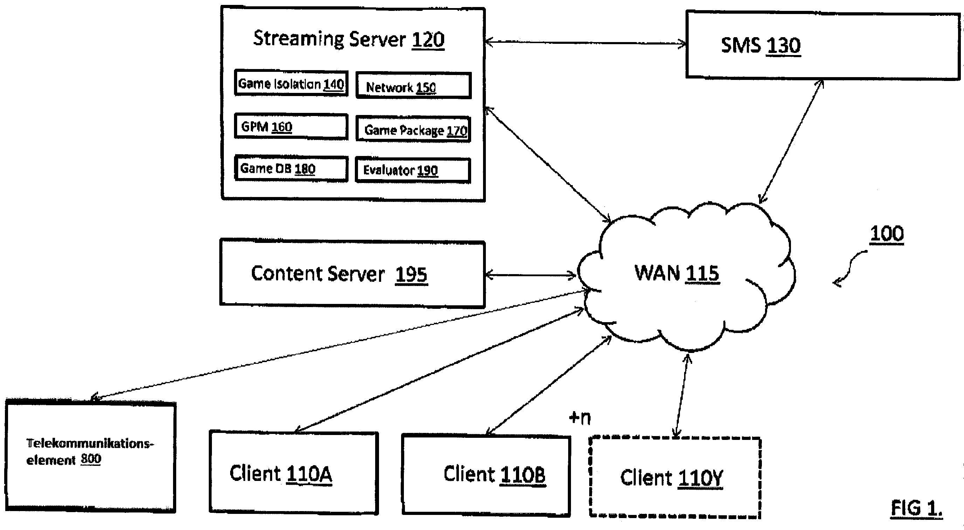

Fig. 1 zeigt die einzelnen Elemente, die in der Kommunikation erforderlich sind. So übernimmt der Streaming Server 120 das Initialisieren der Application und lässt diese in einer virtuellen Umgebung starten. Zu diesem Zwecke verfügt der Streaming Server 120 über ein Game Isolation Modul 140. In diesem wird eine applikationsfreundliche Umgebung gestartet, die zum einen die Lauffähigkeit der Application gewährleistet, jedoch auch für die Wiedergabe der Steuersignale des Clients 110A verantwortlich ist. Der Streaming Server kann beliebig viele Instanzen von derselben oder unterschiedlichen Application starten. Limitierender Faktor ist in dieser Beziehung die Rechenleistung der GPU bei grafischen Anwendungen. Jeder gestarteten Application wird ein Game DB 180 zugewiesen. Dieser Game DB 180 ist für das Hinterlegen relevanter Daten für die Applikation verantwortlich. Um jedoch eine Applikation zu starten, muss diese zunächst als Game Package 170 dem Game Package Manager 180 zur Verfügung stehen. Das Network Modul 150 des Streaming Server 120 übernimmt anschließend das Encoding und Packaging der Frames. Eine weitere Aufgabe des Network Moduls 150 ist das Handling von Recovery Requests des Clients 110A. Um administrative Eingriffe und Auswertungen vorzunehmen, wurde das Evaluator Modul 190 entwickelt. Dieses Modul ist für das Erzeugen von Statistiken verantwortlich.

Der Client dient als Thin-Client der Übertragung der Audio/Video Signale und kann typischerweise auf jeder beliebigen Plattform eingesetzt werden. Ein Streaming Server 120 kann eine Beziehung von 1:n eingehen, jedoch kann ein Client nur die Kommunikation zu einem bestimmten Streaming Server 120 aufnehmen. Typischerweise sind die Anzahl der Clients pro Streaming Server nicht durch die Software, sondern durch die entsprechenden Hardware Kapazitäten der GPU des Streaming Servers 120 limitiert.

Eine Kommunikation zwischen Streaming Server 120 und Client 110A wird immer initial über den Session Management Server 130 hergestellt. Dieser übernimmt den initialen Request des Clients 110A zur Verbindung auf den Streaming Server und sucht für den Client 110A den optimalen Streaming Server 120. In einem System können mehrere Streaming Server parallel im Betrieb sein. Diese müssen auch nicht immer im selben Rechenzentrum oder Land stehen. Nach der Zuweisung eines Streaming Servers 120 durch den Session Management Server 130 für den Client 110A übernimmt der Streaming Server 120 die direkte Kommunikation mit dem Client 110A.

Ein weiteres Element stellt der Content Server 195 dar. Dieser Server ist für die Auslieferung bestimmter Teile in der Interactive-Layer des Clients 110A verantwortlich. So steuert dieser unter anderem das Ausspielen von Werbung entsprechend der Application die auf dem Thin-Client ausgespielt wird. Die nötige Information wird dem Content Server 195 über den Session Management Server 130 zur Verfügung gestellt.

Die Kommunikation findet primär über das WAN (Wide Area Network) 115 statt. Dies beinhaltet diverse Übertragungsarten und ist nicht auf bestimmte Bereiche beschränkt.

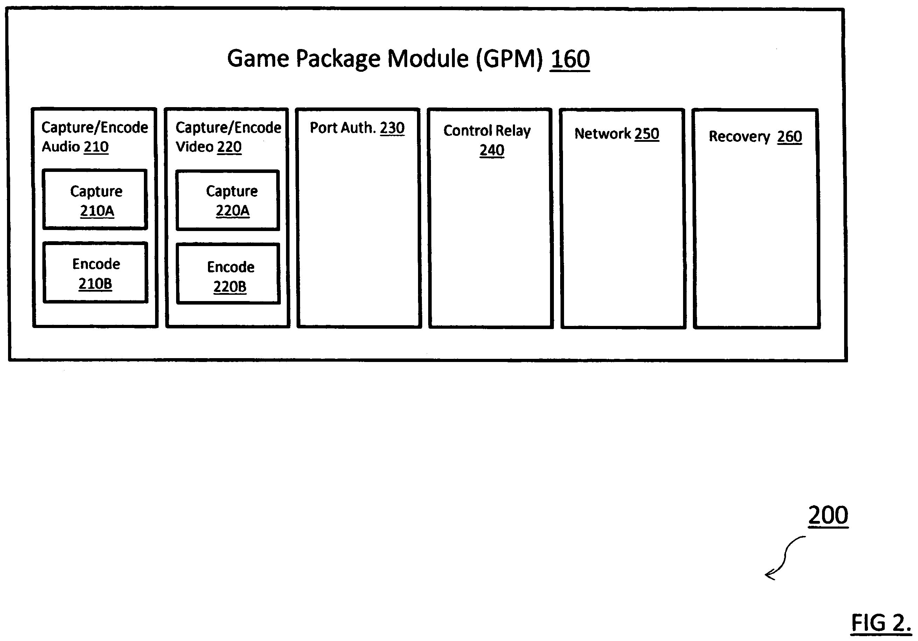

Fig 2 zeigt das Game Package Module 160, welches Teil des Streaming Servers 120 ist. Das Game Package Module 160 wird für jede neue Application initial gestartet und übernimmt sechs Teilbereiche für die Anwendung. Capture Encode Audio 210 ist in die Bereiche Capture 210A und Encode 210 B unterteilt, verantwortlich für das Abgreifen des Audio-Signales. Der Capture Encode Video Bereich 220 ist in dieselben Bereiche unterteilt wie das Audio Modul 210. Das Port Authentification Modul 230 übernimmt die Port Authentifizierung und entspricht dem Bereitstellen der Verbindung zwischen Game Stream Server 120 und dem Client 110A. Das Control Relay 240 ist für XXX verantwortlich. Die Aufgabe des Network Relay 250 ist es, die entsprechenden Pakete zu verschicken und ankommende Pakete zu verwalten. Das Recovery Module 260 ist für das Beantworten der entsprechenden Recovery Requests des Clients 110A verantwortlich.

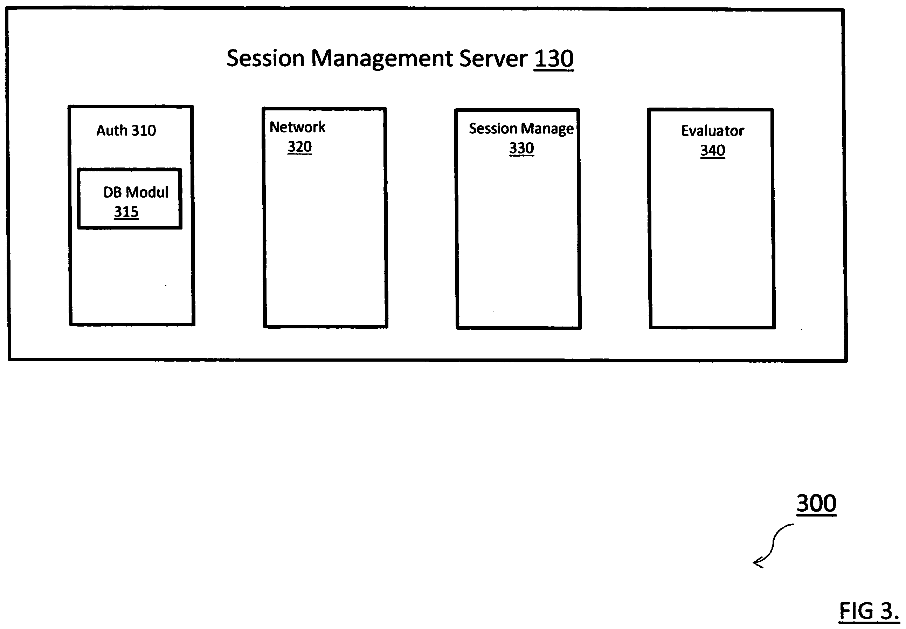

Fig 3 befasst sich mit dem Session Management Server 130. Dieser hat die Aufgabe der Authentifizierung 310 und mithilfe eines nachgelagerten DB Module 315 dessen Aufgabe die zur Authentifizierung genutzten Daten zu speichern bzw. zu hinterlegen. Dieses DB Modul 315 ist jedoch nur optional. Die Möglichkeit einer externen Authentifizierung bleibt davon unberührt. Der Bereich Network 320 ist für die Kommunikation zwischen WAN 115, Streaming Server 120, Content Server 195 und den entsprechenden Clients verantwortlich. Der Session Manager 330 ist dann maßgeblich für das Verwalten der einzelnen Sessions verantwortlich und übernimmt die Zuweisung der Clients an einen entsprechenden Streaming Server. Das Evaluator Modul hat eine direkte Verbindung zu den individuellen Clients und sammelt relevante Daten für eine spätere zentrale Auswertung.

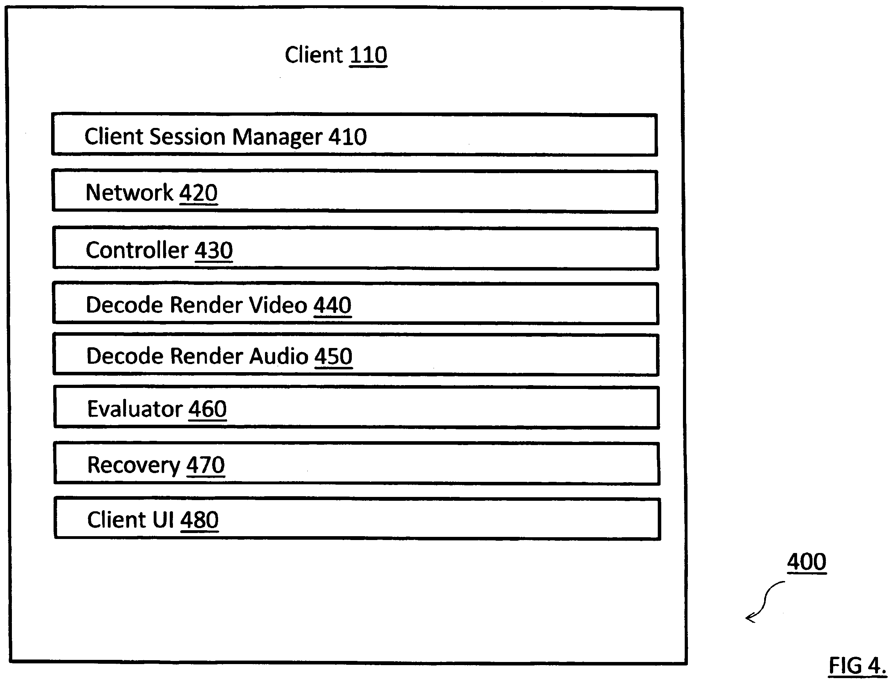

Fig 4 zeigt die einzelnen Elemente des Clients auf. Der komplette Client 110 wurde eigens für die Anwendung entwickelt und benötigt keine separate Software. Er besteht aus acht Bereichen die wie folgt zu beschreiben sind.

Client Session Manager 410, kommuniziert mit dem Streaming Server 120 und dem Session Management Server und ist initial für die Authentifizierung und das Management des Clients verantwortlich.

Network Module 420 ist für das Einrichten der Verbindung und das Aufrechterhalten zuständig. Dieses Modul übernimmt auch das Versenden und Empfangen diverser Pakete.

Der Controller 430 übernimmt das das Ausliefern der angelieferten Frames und Audio Pakete als visuelles Bild im Client.

Decode Render Video 440 und Decode Render Audio 450 erhalten die Pakete, die zuvor vom Netzwerk Modul 420 empfangen wurden und vom Controller 430 weitergeleitet wurden.

Das Elevator Module 460 ist für das Sammeln statistischer Daten verantwortlich und überträgt diese dem Session Management Server. Entsprechend kann der Session Management Server die Verbindung auch optimieren. So entsteht eine Rückkoppelung, die dieses Modul sehr wichtig macht.

Das Recovery Module 470 bewertet eingehende Datenpakete. Sollte ein Datenpaket fehlerhaft sein, so wählt das Modul eine Recovery Strategy und fordert ggf. vom Streaming Server ein neues Paket oder unternimmt andere Maßnahmen, um den Verlust zu kompensieren, ohne einen Verlust in der Latenz oder Qualität zu erzielen.

Die Client UI beinhaltet den interactive layer und Content des Content Server 195. Dort wird der Input des Anwenders abgefangen und an den Streaming Server 120 verschickt.

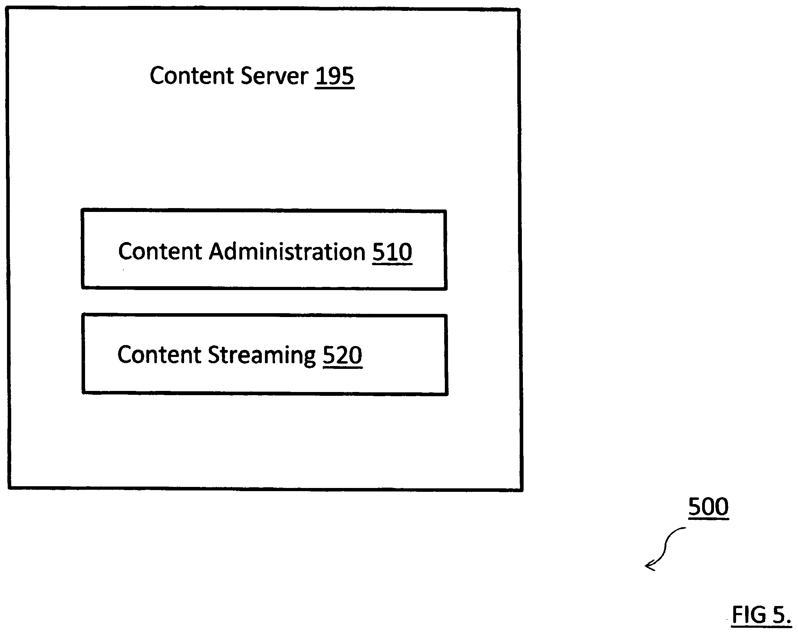

Fig 5 zeigt den Aufbau des Content Servers. Dieser verantwortet die Content Administration 510 und Content Streaming 520.

Die Content Administration dient der Voreinstellung der z.B. anzuzeigenden Werbung innerhalb der interactive layer im Client 110. Über die Content Administration 510 soll sowohl die Frequenz als auch der Inhalt festgelegt werden.

Das Modul Content Streaming 520 übernimmt das Ausspielen des Contents und dient als zentrale Schnittstelle für alle Clients.

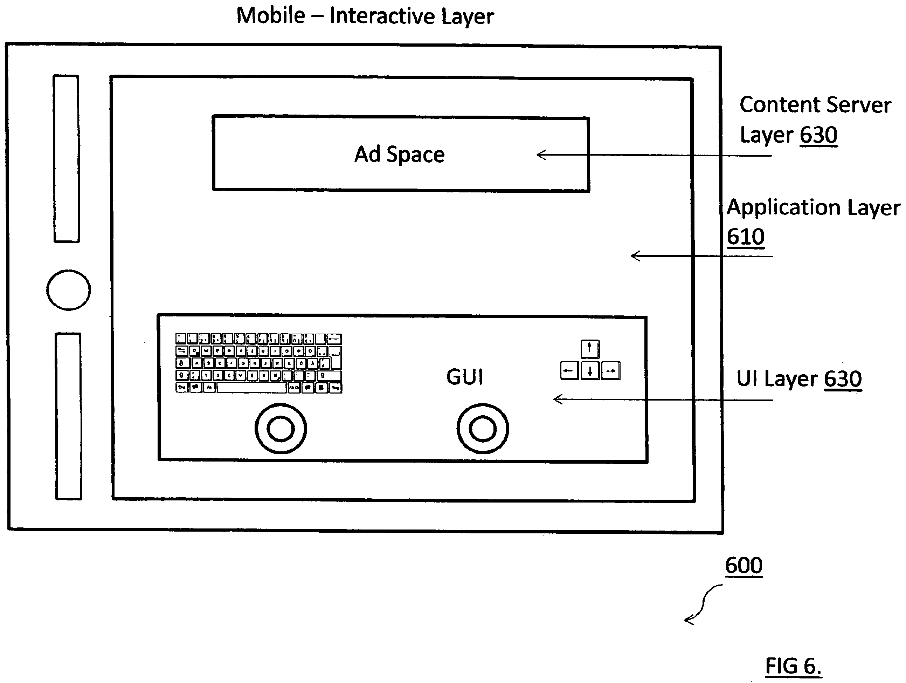

Fig 6 stellt die Interactive Layer 600 da die Teil der Client UI 480 ist. Grundsätzlich wird zwischen drei unterschiedlichen Bereichen differenziert.

Der Applikation-Layer 610 gibt die empfangenen Frames wieder und ist für die visuelle Darstellung der Applikation verantwortlich.

Über der Application Layer 610 befindet sich der UI Layer 620. Dieser Layer lässt sich individuell konfigurieren ist jedoch grundsätzlich maßgeblich für den Input des Anwenders im Client verantwortlich.

Neben den beiden oben genannten Layern gibt es die Möglichkeit Content des Content Servers 195 einzuspielen. Dies passiert dann im Bereich des Content Layers 630.

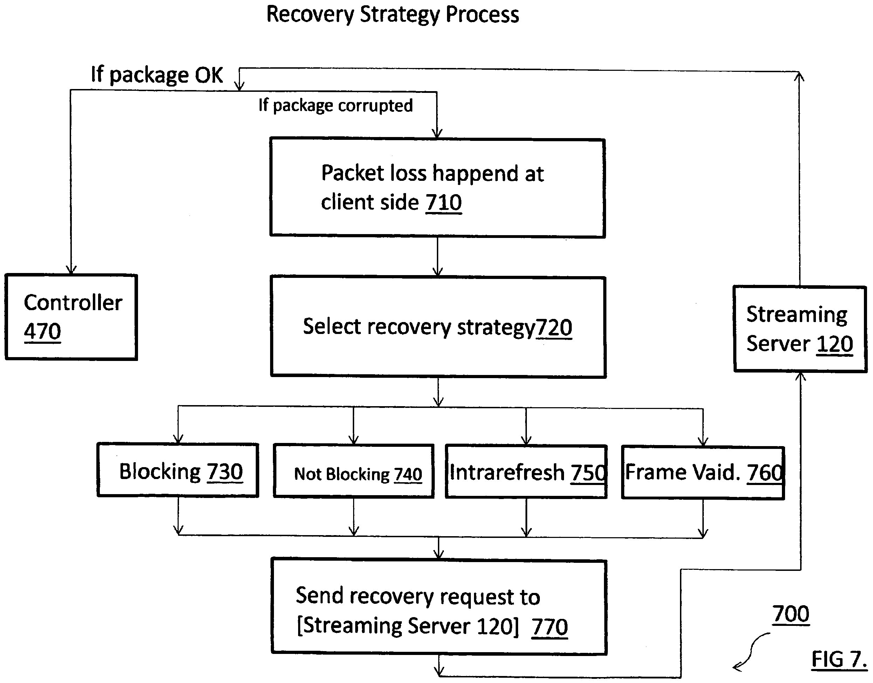

Fig 7 zeigt den Ablauf der Recovery Strategie des Clients 110 im Modul 470. Sobald ein "package loss" festgestellt 710 wurde auf Seiten des Clients, wird das Recovery Modul eine entsprechende Lösung anhand fest definierter Kriterien auswählen 720.

Ist die Entscheidung getroffen, ob Blocking 730, Not Blocking 740, Intrarefresh 750 oder Frame validation 760 gewählt wurde, wird der recovery request 770 an den Streaming Server 120 geschickt. Der Streaming Server verschickt entsprechend ein neues Paket und die Aufgabe des Recovery Moduls 470 wurde erfüllt.

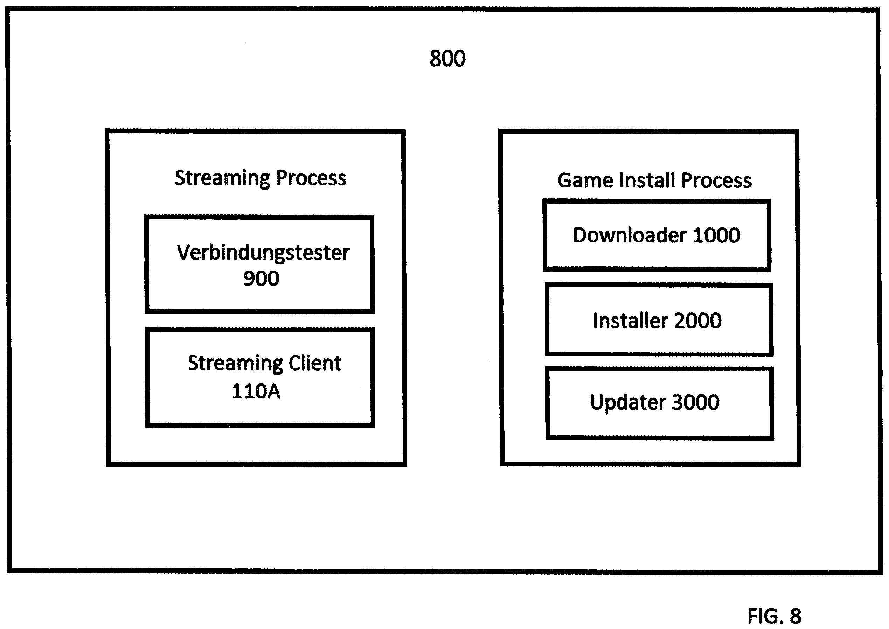

In Fig. 8 ist das Telekommunikationselement 800 und seine Funktionen schematisch dargestellt. Jedem Client kann ein derartiges Verbindungselement zugeordnet sein, was aus Gründen der Übersichtlichkeit in der Zeichnung nicht dargestellt ist. Jedes Telekommunikationselement 800 ist demnach in der Lage, einen Streaming-Prozess und einen Gaming-Install-Prozess durchzuführen.

Beim Streaming-Prozess testet eine als Verbindungstester ausgebildete Verbindungsvorrichtung 900 zunächst die zu ladende Software der Anwendung für den betreffenden Streaming-Client, zum Beispiel 110A, während gleichzeitig parallel dazu in unserem Fall ein Spiel über ein Gaming-Install-Prozess erfolgt. Es kann sich selbstverständlich auch um eine andere Anwendung handeln. Eine als Downloader 1000 ausgebildete Downloadvorrichtung lädt die Software auf dem Endgerät herunter, während eine als Installer ausgebildete Installationsvorrichtung 2000 die Installation gleichzeitig vornimmt und einer als Updater 3000 ausgebildete Updatevorrichtung stets für die neuesten Daten sorgt, also einen stetigen Update-Vorgang durchführt.

Die aus Fig. 8 ersichtliche und als Telekommunikationselement 800 ausgebildete Vorrichtung ermöglicht somit das Abspielen von Anwendungen bevor das eigentliche Downloaden von Daten, deren Installation und das Updating erfolgt. Das Telekommunikationselement 800 ermöglicht somit sozusagen eine kleine Anwendung (Thin-Client) auf dem Endgerät. Diese startet die entsprechenden Prozesse und ermöglicht das Streamen der Anwendung, während die Anwendung installiert wird.

Das Telekommunikationselement 800 ermöglicht also zwei separate Prozesse, nämlich den Streaming-Prozess und den Anwender-Install-Prozess, zum Beispiel ein Gaming-Install-Prozess.

Der Streaming-Prozess besteht bei dem Telekommunikationselement 800 aus zwei Modulen:
Verbindungstester: Verantwortlich für das Testen der Verbindung anhand von drei Kriterien: Latenz, Bandbreite und Netzwerk. Sollte die Verbindung nicht den Anforderungen entsprechen, wird der Streaming-Client nicht gestartet. Die Schwellwerte für die drei Kriterien können flexibel eingestellt und an den Anwendungsfall angepasst werden.

Streaming-Client: Sollte der Verbindungstester erfolgreich sein, so wird der Streaming-Client gestartet. Dieser streamt mit Hilfe der Streaming-Technology die Anwendung direkt in ein lokales Fenster des Endgeräts, zum Beispiel in den PC-Fenster eines Spielers.

Beim Installieren übernimmt dieser Prozess mehrere Aufgaben und arbeitet diese sequenziell ab. Dieser Prozess ist dafür verantwortlich, die Anwendung, während diese gestreamt wird, lokal in einen lauffähigen Zustand zu versetzen. Alle Schritte werden im Hintergrund des Systems durchgeführt und erfordern keine Eingabe des Spielers. Der Streaming-Prozess führt folgende Schritte aus:
Download: Die Anwendung wird parallel zum Stream auf dem lokalen Rechner heruntergeladen.
Installation: Der Prozess installiert die Anwendung im Hintergrund. Eventuell benötigte Dritt-Software wird mit installiert.
Updating: Die Anwendung wird aktualisiert.

Sobald diese Schritte abgeschlossen sind, kann der Anwender die Anwendung bei Neustart des Telekommunikationselementes 800 lokal abspielen.

Die in den Patentansprüchen und in der Beschreibung beschriebenen sowie aus der Zeichnung ersichtlichen Merkmale können sowohl einzeln als auch in beliebigen Kombinationen für die Verwirklichung der Erfindung wesentlich sein.

## Patentansprüche

1. Verfahren zum Streamen und zur Wiedergabe von Anwendungen über ein bestimmtes Telekommunikationssystem, bei welchem ein oder mehrere Streaming-Server [120], die durch Telekommunikation miteinander in Verbindung treten können, die betreffende Anwendung ausführen und die mit dem jeweili-gen Telekommunikationsendgerät [110], unter Berücksichtigung von Anzahl der Hops, Latenz, Bandbreite und ISP, in Verbindung treten, wobei das betreffende Telekommunikationsendgerät [110] die verlangte Anwendung von einem Streaming-Server [120] abruft, der die Rechnerleistung für das Aufbauen des Video-Streams und die Kodierung der betreffenden Anwendung zur Verfügung stellt, zur Wiedergabe von Anwendungen auf anwendungsfremden System-Umgebungen, die sich entweder durch unterschiedliche Hardware- oder Software-Komponenten unterscheiden, wobei der Streaming-Server [120] das Handling der unterschiedlichen Anwendungen sowie das Rendering/Kodierung der Applikation und dessen Audio- und Videosignale übernimmt, wobei die Daten an das jeweilige Telekommunikationsendgerät - Mobilfunkgerät, Tablet, Laptop, PC, TV - übertragen werden und die Übertragung mittels modifiziertem h.264-Protokoll durchgeführt wird und das WAN [115] als Übertragungsmittel für Audio-/Video-Pakete per UDP/TCP verwendet wird und die komplette Rechnerleistung von dem betreffenden Streaming-Server [120] übernommen wird, wobei die paketierten Daten nur bei dem Telekommunikationsendgerät [110] dekodiert werden, wobei zum Bereitstellen einer plattformunabhängigen Streaming-Technologie, die einmal programmiert und auf beliebige Telekommunikationsendgeräte portierbar ist, bei welchem das Streamen der einzelnen Anwendungen, wie Videospiele, über ein WAN erfolgt, derart, dass
a) eine Kommunikation zum Session-Server [130] mittels des Telekommunikationsendgerätes [110] durchgeführt wird;
b) eine bestimmte Session für einen bestimmten Endabnehmer für das zum Telekommunikationsendgerät [110] nächstliegenden Streaming-Server [120] der betreffenden Applikation durchgeführt wird;
c) Session-Informationen durch den betreffenden Session-Server [130] dem Telekommunikationsendgerät [110] und dem Streaming-Server [120] mitgeteilt werden;
d) eine direkte Verbindung zwischen dem Telekommunikationsendgerät [110] und dem Streaming-Server [120] der betreffenden Applikation, wie eines Videospiels, durchgeführt wird;
e) bei der Herstellung einer unmittelbaren Verbindung zwischen dem Telekommunikationsendgerät [110] und dem betreffenden Streaming-Server [120] folgende Schritte eingeleitet werden:
i. Aufzeichnung der Audio-/Video-Daten der laufenden Applikation über den betreffenden Streaming-Server [120] auf dem das Spiel läuft;
ii. Komprimierung der Audio-/Video-Daten durch Hardware-Kodierer;
iii. Übertragung der komprimierten Audio-/Video-Daten über WAN [115];
iv. Empfang der Audio-/Video-Daten auf Seiten des Telekommunikationsendgerätes [110];
v. Dekomprimierung der Audio-/Video-Daten mittels Dekodierer;
vi. Visualisierung der Audio-/Video-Daten auf dem Telekommunikationsendgerät [110];
vii. Aufzeichnung der Eingaben des Benutzers des Telekommunikationsendgerätes [110], wie eines Spielers, auf dem Telekommunikationsendgerät [110] durch einen Thin-Layer [610], der sich dynamisch über das Anzeigefeld legt;
viii. Übertragung der Eingaben zurück zu dem betreffenden Streaming-Server [120] des Spiels und
ix. Wiedergabe der übertragenen Eingaben auf Streaming Server [120],
wobei bei Paketverlust [700] während der Übertragung von Dateien auf das Telekommunikationsendgerät, von einem Streaming-Server [120] zum Telekommunikationsendgerät [110], mit Hilfe von mehreren Fehlerkorrekturverfahren [700], folgende Schritte durchgeführt werden:
a) Wiederherstellungsstrategie wird auf Telekommunikationsendgerät [100] aufgerufen, um eine Spieleerfahrung aufrechtzuerhalten;
b) die geeignete Wiederherstellungsstrategie wird ausgewählt und
c) die Wiederherstellungsanfrage wird zu dem betreffenden Streaming-Server [120] der Applikation wie eines Spiels zurückgesendet,
dieser Prozess kann auch vom Streaming-Server [120] initialisiert werden, wobei das Abspielen von Anwendungen auf einem oder auf mehreren lokalen Endgeräten unabhängig von dem Downloaden auf dem lokalen Endgerät gestreamt wird, **dadurch gekennzeichnet, dass** ein zusätzliches Telekommunikationselement vorgesehen ist, das den Streaming-Prozess mit einer Verbindungstestvorrichtung und den betreffenden Streaming-Client überwacht und für den Installierungsprozess eine Downloadvorrichtung, eine Installationsvorrichtung und eine Updatevorrichtung vorgesehen sind, wobei die Verbindungstestvorrichtung wie folgt arbeitet:
die Verbindungstestvorrichtung ist verantwortlich für das Evaluieren der Verbindung zwischen lokalem Client und Streaming-Server, wobei die Evaluation auf der Basis von vier Kriterien durchgeführt wird: Bandbreite, Latenz, Hops, Anbindung, worin bedeuten:
Bandbreite: Dabei wird eine Datei von dem Streaming-Server heruntergeladen, wobei beim Laden der Dateien die Bandbreite gemessen wird;
Latenz: Dabei wird die Dauer gemessen, die ein Signal benötigt, um vom Streaming-Server zum Client zu gelangen;
Hops: Dabei werden der oder die Verbindungsknoten gemessen, durch die ein Signal bewegt werden muss, bevor es zum Client gelangt;
Anbindung: Dabei ist Anbindung bezogen auf den Paketverlust relevant, wobei der Paketverlust bei optischen Transportationsmedien geringer ist als Kupferkabeln;
wobei die Schwellenwerte individuell konfiguriert werden und an die Ansprüche der Anwendung angepasst werden, wobei im Falle, dass die Verbindung nicht ausreichend ist, der Streaming-Client nicht gestartet und das Spiel oder dergleichen nur geladen/installiert/upgedated wird;
und dass der Streaming-Client gestartet und die Verbindung zum Streaming-Server aufgebaut wird und dieser die anderen direkt auf den lokalen Client streamt, wobei der Streaming-Client so lange aktiv ist, so lange die Anwendung nicht lauffähig auf dem Endgerät installiert ist, wobei der Ablauf zwischen dem Streaming-Server und dem Client wie folgt erfolgt: Bei der Herstellung einer unmittelbaren Verbindung werden zwischen dem Client und dem entsprechenden Streaming-Server folgende Schritte eingeleitet:
i. Aufzeichnung der Audio-/Video-Daten der laufenden Applikation, wie eines Spiels, über den betreffenden Streaming-Server auf dem das Spiel läuft.
ii. Komprimierung der Audio-/Video-Daten durch Hardware-Kodierer;
iii. Übertragung der komprimierten Audio-/Video-Daten über WAN;
iv. Empfang der Audio-/Video-Daten auf Seiten des Telekommunikationsendgerätes;
v. Dekomprimierung der Audio-/Video-Daten
vi. Visualisierung der Audio-/Video-Daten auf dem Telekommunikationsendgerät;
vii. Aufzeichnung der Eingaben des Benutzers des Telekommunikationsendgerätes, wie eines Spielers, auf dem Telekommunikationsendgerät;
viii. Übertragung der Eingaben zurück zu dem betreffenden Streaming-Server des Spiels und
ix. Wiedergabe der übertragenen Eingaben auf Streaming Server.

2. Verfahren nach Anspruch 1, **dadurch gekennzeichnet, dass** die Anwendung auf dem lokalen Endgerät in vollem Umfange ohne Zeitverlust parallel und zeitgleich gestreamt wird, während die gestreamte Anwendung betreffenden lokal auf dem lokalen Endgerät heruntergeladen, installiert, kontinuierlich upgedated und gestartet wird und der Stream geschlossen wird, sobald die Dateien für die Anwendung auf dem lokalen Endgerät in vollem Umfange zur Verfügung gestellt worden sind, auf dem die Anwendungsdateien fortlaufend werden.

3. Verwendung eines Verfahrens nach Anspruch 1 oder 2, mit einer plattformunabhängigen Streaming-Technologie, die einmal programmiert und auf beliebige Telekommunikationsendgeräte [110] portierbar ist, bei welchem das Streamen der einzelnen Anwendungen, wie Videospiele, über ein WAN erfolgt, **dadurch gekennzeichnet, dass**
a) eine Kommunikation zum Session-Server [130] mittels des Telekommunikationsendgerätes [110] durchgeführt wird;
b) eine bestimmte Session für einen bestimmten Endabnehmer für das zum Telekommunikationsendgerät [110] nächstliegenden Streaming-Server [120] der betreffenden Applikation, wie eines Spiels, durchgeführt wird;
c) Session-Informationen durch den betreffenden Session-Server [130] dem Telekommunikationsendgerät [110] und dem Streaming-Server [120] mitgeteilt werden;
d) eine direkte Verbindung zwischen dem Telekommunikationsendgerät [110] und dem Streaming-Server [120] der betreffenden Applikation, wie eines Videospiels, durchgeführt wird;
e) bei der Herstellung einer unmittelbaren Verbindung zwischen dem Telekommunikationsendgerät [110] und dem betreffenden Streaming-Server [120] folgende Schritte eingeleitet werden:
i. Aufzeichnung der Audio-/Video-Daten der laufenden Applikation, wie eines Spiels, über den betreffenden Streaming-Server [120] auf dem das Spiel läuft;
ii. Komprimierung der Audio-/Video-Daten durch Hardware-Kodierer;
iii. Übertragung der komprimierten Audio-/Video-Daten über WAN [115];
iv. Empfang der Audio-/Video-Daten auf Seiten des Telekommunikationsendgerätes [110];
v. Dekomprimierung der Audio-/Video-Daten mittels Dekodierer;
vi. Visualisierung der Audio-/Video-Daten auf dem Telekommunikationsendgerät [110];
vii. Aufzeichnung der Eingaben des Benutzers des Telekommunikationsendgerätes [110], wie eines Spielers, auf dem Telekommunikationsendgerät [110] durch einen Thin-Layer [610], der sich dynamisch über das Anzeigefeld legt;
viii. Übertragung der Eingaben zurück zu dem betreffenden Streaming-Server [120] des Spiels und
ix. Wiedergabe der übertragenen Eingaben auf Streaming Server [120],
wobei bei Paketverlust [700] während der Übertragung von Daten auf das Telekommunikationsendgerät [110] von einem Streaming-Server [120] zum Telekommunikationsendgerät [110] mit Hilfe von mehreren Fehlerkorrekturverfahren [700], folgende Schritte durchgeführt werden:
a) Wiederherstellungsstrategien werden aufgerufen, um eine reibungslose Spieleerfahrung aufrechtzuerhalten;
b) die Wiederherstellungsstrategie wird ausgewählt und
c) die Wiederherstellungsanfrage wird zu dem betreffenden Streaming-Server [120] der Applikation, wie des Spiels, zurückgesendet,
dieser Prozess kann auch vom Streaming-Server initialisiert werden, wobei dem Telekommunikationsnetz mindestens ein zusätzliches Telekommunikationsglied, für jeden Client, zugeordnet ist, das ein Streaming-Prozess mit einem Verbindungstester und wenigstens einem Streaming-Client umfasst für die Installation der Dateien und für die Anwendung ein Element zum Downloaden, Installieren und Updaten vorgesehen ist.

## Claims

1. Method of streaming and running applications by way of a specific telecommunication system, whereby one or more streaming servers [120] that can be interconnected by telecommunication, execute the application and, depending on the number of hops, latency, band width and ISP, communicate with the respective telecommunication terminal device [110], whereby the telecommunication terminal device [110] calls up the required application from a streaming server [120] that makes the computing power available for the setting up of the video-stream and the encoding of the application concerned for running applications on non-application-specific system environments that differ either in hardware or software components, whereby the streaming server [120] takes over the handling of the different applications and the rendering/encoding of the application and its audio and video signals, whereby data are transmitted to the respective telecommunication terminal device - mobile telephone unit, tablet, laptop, PC, TV - and transmission is undertaken by means of a modified h.264 protocol and the WAN [115] is used as a transmission means for audio and video packets by UDP/TCP and full computing power is provided by the relevant streaming server [120], whereby the packetised data are decoded only on the telecommunication terminal device [110], whereby a platform-independent streaming technology that is programmed once can be ported to any telecommunication terminal devices and streaming of the individual applications, such as video games, takes place by way of a WAN, such that
a) a communication to the session server [130] is executed by means of the telecommunication terminal device [110];
b) a specific session is executed for a specific end-user for the streaming server [120] of the application concerned located closest to the telecommunication terminal device [110];
c) session information is communicated to the telecommunication terminal device [110] and the streaming server [120] by the session server [130] concerned;
d) a direct connection is set up between the telecommunication terminal device [110] and the streaming server [120] of the application concerned, such as a video game;
e) when setting up a direct connection between the telecommunication terminal device [110] and the streaming server [120] concerned the following steps are initiated:
i. recording of the audio and video data of the running application by way of the streaming server [120] concerned on which the game is running;
ii. compression of the audio and video data by hardware encoder;
iii. transmission of the compressed audio and video data by way of WAN [115];
iv. reception of the audio and video data by the telecommunication terminal device [110];
v. decompression of the audio and video data by means of decoder;
vi. visualisation of the audio and video data on the telecommunication terminal device [110];
vii. recording of the inputs of the user of the telecommunication terminal device [110], such as a gamer, on the telecommunication terminal device [110] by a thin layer [610] that is laid dynamically over the display panel;
viii. transmission of inputs back to the relevant streaming server [120] of the game and
ix. running of the transmitted inputs on streaming server [120],
whereby in the event of packet loss [700] during the transmission of data to the telecommunication terminal device [110], from a streaming server [120] to the telecommunication terminal device [110], with the aid of a number of fault correction processes, the following steps are executed:
a) recovery strategy is activated on telecommunication terminal device [100] to maintain a game experience;
b) the suitable recovery strategy is selected and
c) the recovery request is sent back to the relevant streaming server [120] of the application, such as a game,
whereby this process can also be initialised by the streaming server [120], whereby the playback of applications on one or more local terminal devices is streamed independently of downloading on the local terminal device, **characterised in that** an additional telecommunication element is provided for that monitors the streaming process with a connection test device and the relevant streaming client and that for the installation process a download device, an installation device and an update device are provided for, whereby the connection test device operates as follows:
the connection test device is responsible for evaluation of the connection between local client and streaming server, the evaluation being carried out on the basis of four criteria: bandwidth, latency, hops, link, where these mean the following:
Bandwidth: Here a file is downloaded from the streaming server, the bandwidth being measured during loading of the files;
Latency: Here the time that a signal needs to move from the streaming server to the client is measured;
Hops: Here the connection node or nodes through which a signal has to be moved before it reaches the client is or are measured;
Link: Here the link relative to the packet loss is relevant, the packet loss in optical transportation media being less than in copper cables;
whereby threshold values are configured individually and adapted to suit the requirements of the application, whereby in the event that the connection is insufficient the streaming client is not started and the game or similar is only loaded or installed or updated; and that the streaming client is started and the connection to the streaming server is set up and this streams the other ones to the local client direct, whereby the streaming client is active as long as the application has not been executably installed on the terminal device, whereby the process flow between the streaming server and the client takes place as follows: when setting up a direct connection between the telecommunication terminal device and the streaming server concerned the following steps are initiated:
i. recording of the audio and video data of the running application, such as a game, by way of the streaming server concerned on which the game is running;
ii. compression of the audio and video data by hardware encoder;
iii. transmission of the compressed audio and video data by way of a WAN;
iv. reception of the audio and video data by the telecommunication terminal device;
v. decompression of the audio and video data;
vi. visualisation of the audio and video data on the telecommunication terminal device;
vii. recording of the inputs of the user of the telecommunication terminal device, such as a gamer, on the telecommunication terminal device;
viii. transmission of the inputs back to the relevant streaming server of the game, and
ix. running of the transmitted inputs on streaming server.

2. Method in accordance with claim 1, **characterised in that** the application is streamed in full in parallel and simultaneously and without time loss on the local terminal device, while the streamed application is being locally downloaded, installed, continuously updated and started on the local terminal device and the stream is closed as soon as the files for the application have been made available in full on the local terminal device on which the application files are being continuously updated.

3. Use of a method in accordance with claim1 or 2 having platform-independent streaming technology that is programmed once and can be ported to any telecommunication terminal device [110], where streaming of the individual applications, such as video games, can be done by way of a WAN, **characterised in that**
a) a communication to the session server [130] is executed by means of the telecommunication terminal device [110];
b) a specific session is executed for a specific end-user for the streaming server [120] of the application concerned, such as a game, located closest to the telecommunication terminal device [110];
c) session information is communicated to the telecommunication terminal device [110] and the streaming server [120] by the session server [130] concerned;
d) a direct connection is set up between the telecommunication terminal device [110] and the streaming server [120] of the application concerned, such as a video game;
e) when setting up a direct connection between the telecommunication terminal device [110] and the streaming server [120] concerned the following steps are initiated:
i. recording of the audio and video data of the running application, such as a game, by way of the streaming server [120] concerned on which the game is running;
ii. compression of the audio and video data by hardware encoder;
iii. transmission of the compressed audio and video data by way of WAN [115];
iv. reception of the audio and video data by the telecommunication terminal device [110];
v. decompression of the audio and video data by means of decoder;
vi. visualisation of the audio and video data on the telecommunication terminal device [110];
vii. recording of the inputs of the user of the telecommunication terminal device [110], such as a gamer, on the telecommunication terminal device [110] by a thin layer [610] that is laid dynamically over the display panel;
viii. transmission of the inputs back to the relevant streaming server [120] of the game, and
ix. running of the transmitted inputs on streaming server [120],
whereby in the event of packet loss [700] during the transmission of data to the telecommunication terminal device [110], from a streaming server [120] to the telecommunication terminal device [110], with the aid of a number of fault correction processes, the following steps are executed:
a) recovery strategies are called up to maintain a trouble-free game experience;
b) the recovery strategy is selected, and
c) the recovery request is sent back to the relevant streaming server [120] of the application, such as the game,
whereby this process can also be initialised by the streaming server, the telecommunication network being assigned for each client at least one additional telecommunication element that incorporates a streaming process having a connection tester and at least one streaming client for installation of the files, an element for downloading, installing and updating being provided for for the application.

## Revendications

1. Procédé de streaming et de lecture d'applications via un système de télécommunication précis, au cours duquel un ou plusieurs serveurs de streaming [120], susceptibles d'être combinés entre eux par télécommunication interposée, exécutent l'application concernée et entrent en liaison avec le terminal de télécommunication [110] respectif en tenant compte du nombre de sauts, de la latence, de la largeur de bande et du fournisseur de services Internet (ISP), sachant que le terminal de télécommunication [110] concerné appelle d'un serveur de streaming [120] l'application exigée, lequel serveur fournit la puissance de calcul requise pour générer le flux vidéo et le codage de l'application concernée, pour permettre la lecture des applications dans des environnements système étrangers à l'application, environnements qui se différencient soit par des composantes matérielles ou logicielles différentes, sachant que le serveur de streaming [120] assume la gestion des différentes applications ainsi que le rendu/le codage de l'application, et prend en charge ses signaux audio et vidéo, sachant que les données sont transmises au terminal de télécommunication respectif - appareil de téléphonie mobile, tablette, ordinateur portable, PC, téléviseur - et que la transmission a lieu via un protocole h.264 modifié et que le WAN [115] sert de moyen de transmission des paquets audio-vidéo via UDP/TCP et que l'ensemble de la puissance de calcul est pris en charge par le serveur de streaming [120] concerné, sachant que les données réunies en paquets ne sont décodées que dans le terminal de télécommunication [110], sachant qu'une technologie de streaming non asservie à une plate-forme et qui n'est programmée qu'une fois est portable vers des terminaux de télécommunication quelconques et que le streaming des différentes applications, des jeux vidéo par exemple, a lieu via WAN, de sorte que
a) une communication est établie avec le serveur de session [130] au moyen du terminal de télécommunication [110] ;
b) une session précise a lieu pour un preneur final précis, pour le serveur de streaming [120] - le plus proche du terminal de télécommunication [110] - de l'application concernée;
c) des informations de session sont communiquées par le serveur de session [130] concerné au terminal de télécommunication [110] et au serveur de streaming [120];
d) une liaison directe est établie entre le terminal de télécommunication [110] et le serveur de streaming [120] de l'application concernée, un jeu vidéo par exemple;
e) lors de l'établissement d'une liaison directe entre le terminal de télécommunication [110] et le serveur de streaming [120] concerné, les étapes suivantes sont entamées:
i. Enregistrement des données audio-vidéo de l'application en cours d'exécution, via le serveur de streaming [120] concerné sur lequel le jeu se déroule;
ii. Compression des données audio-vidéo par un matériel codeur;
iii. Transmission des données audio-vidéo comprimées via un WAN [115];
iv. Réception des données audio-vidéo du côté du terminal de télécommunication [110];
v. Décompression des données audio-vidéo par un décodeur ;
vi. Visualisation des données audio-vidéo sur le terminal de télécommunication [110] ;
vii. Enregistrement des saisies de l'utilisateur du terminal de télécommunication [110], d'un joueur par exemple, sur le terminal de télécommunication [110], au moyen d'un Thin-Layer [610] qui se superpose dynamiquement au-dessus du champ d'affichage.
viii. Transmission retour des saisies vers le serveur de streaming [120] concerné du jeu, et
ix. Exécution des saisies transmises sur le serveur de streaming [120],
sachant qu'en cas de perte de paquets [700] pendant la transmission de données sur le terminal de télécommunication, d'un serveur de streaming [120] au terminal de télécommunication [110], les étapes suivantes sont exécutées à l'aide de plusieurs procédures de correction d'erreurs :
a) Une stratégie de restauration est appelée sur le terminal de télécommunication [100], pour préserver l'expérience de jeu ;
b) La stratégie de restauration appropriée est sélectionnée et
c) La demande de restauration est renvoyée au serveur concerné de streaming [120] de l'application, un jeu par exemple,
sachant que ce processus peut également être initialisé par le serveur de streaming [120], sachant que l'exécution d'applications sur un ou sur plusieurs terminaux locaux a lieu en flux indépendamment du téléchargement sur le terminal local, **caractérisé en ce qu'**est prévu un élément de télécommunication supplémentaire qui surveille le processus de streaming avec un dispositif testeur de liaison et qui surveille le client de streaming concerné, et **en ce que** pour le processus d'installation sont prévus un dispositif de téléchargement, un dispositif d'installation et un dispositif d'actualisation, sachant que le dispositif testeur de liaison fonctionne comme suit:
le dispositif testeur de liaison a la responsabilité d'évaluer la liaison entre le client local et le serveur de streaming, sachant que l'évaluation a lieu sur la base de quatre critères : la largeur de bande, la latence, les sauts, la connexion, ces termes ayant respectivement les significations suivantes:
Largeur de bande: Un fichier est téléchargé depuis le serveur de streaming, sachant que la largeur de bande est mesurée pendant le chargement des fichiers; Latence: Ce faisant est mesuré le temps que met un signal pour parvenir du serveur de streaming au client;
Sauts : Ce faisant est mesuré le nombre de nœuds de liaison, un ou plusieurs, par lequel ou lesquels le signal doit transiter avant de parvenir au client;
Connexion : Ce faisant est pertinente la connexion référée à la perte de paquets, sachant que la perte de paquets avec les médias de transport optiques est inférieure à celle des câbles en cuivre;
sachant que les valeurs seuils sont configurées individuellement et adaptées aux exigences de l'application, sachant que dans le cas où la liaison n'est pas suffisante, le client du streaming n'est pas démarré et le jeu ou similaire ne fait l'objet que d'un chargement/d'une installation/d'une actualisation;
et **en ce que** le client du streaming est démarré et que la liaison avec le serveur de streaming est établie et que ce serveur diffuse les autres directement sur le client local, sachant que le client du streaming est actif aussi longtemps que l'application n'est pas installée sur le terminal de manière à pouvoir être exécutée, sachant que le déroulement entre le serveur de streaming et le client se déroule comme suit: lors de l'établissement d'une liaison directe entre le terminal de télécommunication et le serveur de streaming concerné, les étapes suivantes sont entamées:
i. Enregistrement des données audio-vidéo de l'application en cours d'exécution, un jeu par exemple, via le serveur de streaming concerné sur lequel le jeu se déroule;
ii. Compression des données audio-vidéo par un matériel codeur;
iii. Transmission des données audio-vidéo comprimées via un WAN;
iv. Réception des données audio-vidéo du côté du terminal de télécommunication;
v. Décompression des données audio-vidéo par un décodeur;
vi. Visualisation des données audio-vidéo sur le terminal de télécommunication;
vii. Enregistrement des saisies de l'utilisateur du terminal de télécommunication, d'un joueur par exemple, sur le terminal de télécommunication;
viii. Transmission retour des saisies vers le serveur de streaming concerné du jeu, et
ix. Exécution des saisies transmises sur le serveur de streaming.

2. Procédé selon la revendication 1, **caractérisé en ce que** l'application est diffusée dans son intégralité sur le terminal local, parallèlement sans perte de temps et en même temps, tandis que l'application diffusée est localement téléchargée, installée, continuellement actualisée et démarrée sur le terminal local, et que le flux est coupé dès que les fichiers de l'application ont été placés à disposition dans leur intégralité sur le terminal local sur lequel les fichiers d'application sont continuellement actualisés.

3. Utilisation d'un procédé selon la revendication 1 ou 2, comprenant une technologie de streaming non asservie à une plate-forme, qui est programmée une fois et est portable sur des terminaux de télécommunication [110] quelconques, procédé au cours duquel le streaming des différentes applications, des jeux vidéos par exemple, a lieu via un WAN, **caractérisée en ce que**
a) une communication est établie avec le serveur de session [130] au moyen du terminal de télécommunication [110];
b) une session précise est exécutée pour un preneur final précis, pour le serveur de streaming [120] - le plus proche du terminal de télécommunication [110] - de l'application concernée, un jeu par exemple;
c) des informations de session sont communiquées par le serveur de session concerné [130] au terminal de télécommunication [110] et au serveur de streaming [120];
d) une liaison directe est établie entre le terminal de télécommunication [110] et le serveur de streaming [120] de l'application concernée, un jeu vidéo par exemple;
e) lors de l'établissement d'une liaison directe entre le terminal de télécommunication [110] et le serveur de streaming [120] concerné, les étapes suivantes sont entamées:
i. Enregistrement des données audio-vidéo de l'application en cours d'exécution, un jeu par exemple, via le serveur de streaming [120] concerné sur lequel le jeu se déroule;
ii. Compression des données audio-vidéo par un matériel codeur;
iii. Transmission des données audio-vidéo comprimées via un WAN [115];
iv. Réception des données audio-vidéo du côté du terminal de télécommunication [110];
v. Décompression des données audio-vidéo par un décodeur;
vi. Visualisation des données audio-vidéo sur le terminal de télécommunication [110];
vii. Enregistrement des saisies de l'utilisateur du terminal de télécommunication [110], d'un joueur par exemple, sur le terminal de télécommunication [110], au moyen d'un Thin-Layer [610] qui se superpose dynamiquement au-dessus du champ d'affichage ;.
viii. Transmission retour des saisies vers le serveur de streaming [120] concerné du jeu et
ix. Exécution des saisies transmises sur le serveur de streaming [120],
sachant qu'en cas de perte de paquets [700] pendant la transmission de données sur le terminal de télécommunication, d'un serveur de streaming [120] au terminal de télécommunication [110], les étapes suivantes sont exécutées à l'aide de plusieurs procédures de correction d'erreurs:
a) Des stratégies de restauration sont appelées pour préserver une expérience des jeux sans accroc;
b) La stratégie de restauration est sélectionnée, et
c) La demande de restauration est renvoyée au serveur de streaming [120] concerné de l'application, du jeu par exemple,
sachant que ce processus peut aussi être initialisé par le serveur de streaming, sachant qu'au réseau de télécommunication est attribué au moins un organe de télécommunication supplémentaire, pour chaque client, organe qui comprend un processus de streaming avec un testeur de liaison et au moins un client de streaming pour l'installation des fichiers, sachant que pour l'application est prévu un élément pour télécharger, installer et actualiser.
